# EUROPÄISCHE PATENTANMELDUNG

(11) **EP 2 634 698 A1**
(43) Veröffentlichungstag der Anmeldung: **04.09.2013**
(21) Anmeldenummer: 12157720.9
(22) Anmeldetag: 01.03.2012
(51) Int. Cl.: G06F 11/22

(54) **Verfahren zur Prüfung eines anwendungsspezifischen Testprogramms zum Testen eines Mikroprozessorsystems**

(71) Anmelder: Siemens Aktiengesellschaft, 80333 München (DE)
(72) Erfinder: Schinnerl, Johann, 8051 Graz (AT); Wahrbichler, Joachim, 8043 Graz (AT)

(57) **Zusammenfassung**

Die Erfindung betrifft ein computer-implementiertes Verfahren zur Prüfung eines anwendungsspezifischen Testprogramms (102, 104, 110) zum Testen eines Mikroprozessorsystems (114), welches einen Mikroprozessor (114) und einen Programmspeicher zum Speichern eines Steuerungsprogramms (100, 108) umfasst, wobei das Steuerungsprogramm (100, 108) durch den Mikroprozessor (114) ausführbar ist, wobei das Steuerungsprogramm (100, 108) eine erste Menge von Kommandocodewörtern umfasst, wobei das Verfahren folgende Schritte umfasst:
- Lesen des anwendungsspezifischen Testprogramms (102, 104, 110) aus einem Speicher durch ein Computersystem, wobei das anwendungsspezifische Testprogramm (102, 104, 110) eine zweite Menge von Kommandocodewörtern umfasst,
- Lesen des Steuerungsprogramms (100, 108) durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe (124) eines Validierungssymbols.

## Beschreibung

### Verfahren zur Prüfung eines anwendungsspezifischen Testprogramms zum Testen eines Mikroprozessorsystems

Die Erfindung betrifft ein Verfahren zur Prüfung eines anwendungsspezifischen Testprogramms zum Testen eines Mikroprozessorsystems, eine Vorrichtung zur Prüfung eines anwendungsspezifischen Testprogramms zum Testen eines Mikroprozessorsystems sowie ein Computerprogrammprodukt.

Mit zunehmendem Einsatz von Mikroprozessoren in sicherheitstechnischen Produkten, wie Steuerung und Sensoren, entstanden auch besondere Anforderungen an deren Sicherheit. Die Reaktion der Steuerung im Fehlerfall muss deterministisch sein und gefährliche Aktionen müssen verhindert werden können. Um einen Mikroprozessor, der ein sehr komplexes Bauteil ist und, dessen Verhalten im Fehlerfall nicht definiert werden kann, für den sicherheitstechnischen Einsatz anzupassen, müssen Maßnahmen getroffen werden, mit deren Hilfe Ausfälle im Betrieb aufgedeckt und entsprechende sicherheitsgerichtete Reaktionen eingeleitet werden können.

In der Praxis führt somit ein Mikroprozessor nicht nur die eigentliche Funktion aus, sondern führt auch gleichzeitig permanent eine Selbsttestung durch. Diese Selbsttestung umfasst Ausführungen bestimmter Operationen, deren Ergebnisse mit vordefinierten Sollwerten verglichen werden. Eine festgestellte Abweichung zwischen Soll- und Ist-Wert sollte Anlass zur Ausführung einer sicherheitsgerichteten Reaktion bzw. Gegenmaßnahme führen.

Mikroprozessor gesteuerte Komponenten einer technischen Steuerung oder eines Automatisierungssystems erfassen über Sensoren analoge oder über Schnittstellen zu anderen Komponenten digitale Eingangsgrößen. Die erfasste Information wird von einem Mikroprozessor verarbeitet und die berechneten Ausgangsgrößen werden entweder zur Einwirkung auf technische Prozesse über Aktuatoren oder für eine Weitergabe an andere Komponenten über digitale Schnittstellen verwendet.

Dabei sind die Integrität und die Fehlerfreiheit der Ausgangsgrößen bei korrekt erfassten Eingangsgrößen unter anderem von der Unversehrtheit der Befehls ausführenden Hardwarekomponenten des Mikroprozessors abhängig. Ein eventuell vorliegender Defekt einer Befehle ausführenden Hardwarekomponente des Mikroprozessors kann zu einer fehlerhaften Ausführung einer einzelnen Instruktion aus einem implementierten Befehlssatz führen. Dies wiederum kann zu einer fehlerhaften Berechnung einer Ausgangsgröße führen. Insbesondere bei Mikroprozessor gesteuerten Komponenten, die für eine sicherheitskritische Steuerung eingesetzt werden, ist es notwendig, eine solche fehlerhafte Berechnung einer Ausgangsgröße innerhalb kurzer Zeit zu erkennen.

Um die verschiedenen Verarbeitungseinheiten und Peripherieelemente eines Mikroprozessorsystems kontinuierlich zu testen, werden üblicherweise quasi zeitgleich zur Ausführung von eigentlichen Verarbeitungsalgorithmen eines Steuerungsprogramms spezielle Tests mittels eines möglichst anwendungsspezifischen Testprogramms durchgeführt. Derartige Tests umfassen beispielsweise einen Programmspeichertest, einen Datenspeichertest, Befehlstests und/oder Adressierungstests. Im Prinzip werden hierbei vordefinierte Verarbeitungsschritte in einem nativen Befehlssatz, welcher üblicherweise in einer maschinennahen Sprache, wie zum Beispiel Assembler, geschrieben ist, zur Ausführung gebracht und danach mit vorher bekannten Ergebnissen verglichen. Jede Abweichung einer Berechnung einer Ausgangsgröße von den erwarteten Soll-Werten wird als ein Fehler der Mikroprozessor-Hardware bewertet. Zur Gewährleistung einer hohen Fehleraufdeckungsrate sollte dabei das Testprogramm zumindest alle die Befehle sowie alle Adressierungsarten aufweisen, die auch von dem eigentlichen Steuerungsprogramm des Mikroprozessors verwendet werden.

Das Steuerungsprogramm eines Mikroprozessors ist heute üblicherweise in einer höheren Programmiersprache, wie zum Beispiel C oder C++, geschrieben. Welche Befehle des Mikroprozessors bei der Ausführung des Steuerungsprogramms tatsächlich verwendet werden, ist abhängig vom eingesetzten Compiler. Daher ist die Teilmenge der Befehle, welche von dem Testprogramm unbedingt erfasst werden müssen, im Allgemeinen nicht bekannt. Im Stand der Technik werden daher Testprogramme entwickelt, die systematisch den gesamten Befehlssatz eines Mikroprozessors samt allen möglichen Adressierungsarten der Operanden umfassen. Da eine höhere Programmiersprache nicht den gesamten Befehlssatz eines Mikroprozessors abdecken kann, erfolgt eine Implementierung eines Testprogramms mit allen möglichen Befehlstests eines Mikroprozessors, notwendigerweise in Assembler-Sprache. Daraus resultiert bei der Entwicklung und Implementierung des Testprogramms mit Abdeckung aller möglicher Befehlstests eines Mikroprozessors ein sehr hoher Entwicklungsaufwand. Da die im heutigen Stand der Technik entwickelten Selbsttests der Mikroprozessoren auch Befehle enthalten, die in dem eigentlichen Steuerungsprogramm gar nicht verwendet werden, werden unnötigerweise Prozessorressourcen (Befehlslaufzeiten) verschwendet, was unter Umständen sogar zu Performanceeinschränkungen bei der Ausführung des eigentlichen Steuerprogramms führen kann.

Demgegenüber liegt der Erfindung die Aufgabe zugrunde, ein verbessertes Verfahren zur Prüfung eines anwendungsspezifischen Testprogramms zum Testen eines Mikroprozessorsystems, eine verbesserte Vorrichtung zur Prüfung eines anwendungsspezifischen Testprogramms zum Testen eines Mikroprozessorsystems sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren geschaffen zur Prüfung eines anwendungsspezifischen Testprogramms zum Testen eines Mikroprozessorsystems, welches einen Mikroprozessor und einen Programmspeicher zum Speichern eines Steuerungsprogramms umfasst, wobei das Steuerungsprogramm durch den Mikroprozessor ausführbar ist, wobei das Steuerungsprogramm eine erste Menge von Kommandocodewörtern umfasst, wobei das Verfahren folgende Schritte umfasst:
- Lesen des anwendungsspezifischen Testprogramms aus einem Speicher durch ein Computersystem, wobei das anwendungsspezifische Testprogramm eine zweite Menge von Kommandocodewörtern umfasst,
- Lesen des Steuerungsprogramms durch das Computersystem,
- Prüfung durch das Computersystem, ob die erste Menge von Kommandocodewörtern und die zweite Menge von Kommandocodewörtern übereinstimmen,
im Falle, dass die erste Menge von Kommandocodewörtern in der zweiten Menge von Kommandocodewörtern enthalten ist, Ausgabe eines Validierungssymbols.

Das Verfahren stellt in vorteilhafter Weise einem Entwickler bzw. Implementierer eines Testprogramms für ein Mikroprozessorsystem ein Analyseverfahren zur Bestimmung eines Testabdeckungsgrades des jeweils entwickelten bzw. implementierten Testprogramms zur Verfügung. Dadurch, dass dem Entwickler bzw. Implementierer eines Testprogramms für ein Mikroprozessorsystem eine Information geliefert wird, welche Kommandocodewörter von dem Steuerungsprogramm tatsächlich verwendet werden, lässt sich die Implementierung eines Befehlstests zum Testen der Integrität und Unversehrtheit der Befehlsausführungs-Hardware des Mikroprozessors auf die tatsächlich notwendigen Befehlssätze, welche Kommandocodewörter enthalten, die von dem Steuerungsprogramm angewandt werden, beschränken.

Im Vergleich zu einer vollständigen Implementierung von allen Befehlssätzen, die Kommandocodewörter enthalten, zu dessen Ausführung der Mikroprozessor befähigt wäre, welche aber nicht von dem Steuerungsprogramm werden, könnte eine gezielte Implementierung von Befehlssätzen, die nur Kommandocodewörter enthalten, welche auch von dem Steuerungsprogramm tatsächlich verwendet werden, die Laufzeit des Testprogramms signifikant verkürzen. Durch eine gezielte Implementierung von Befehlssätzen, die nur Kommandocodewörter enthalten, die tatsächlich von dem Steuerungsprogramm verwendet werden, könnten Prozessorressourcen eingespart werden. Gleichzeitig könnte die Reaktionszeit für ein Aufdecken von Fehlern und somit auch die Zeit, die notwendig ist, um die durch den Mikroprozessor ausgeführten Steuerung wieder in einen sicheren Zustand zu versetzen, verkürzt werden.

Nach einer Ausführungsform der Erfindung umfasst die Prüfung durch das Computersystem, ob die erste Menge von Kommandocodewörtern und die zweite Menge von Kommandocodewörtern übereinstimmen ein Parsing der ersten Menge von Kommandocodewörtern und der zweiten Menge von Kommandocodewörtern, wobei das Parsing folgende Schritte umfasst:
- Erstellen eines ersten abstrakten Syntaxbaums unter Nutzung der ersten Menge von Kommandocodewörtern und
- Erstellen eines zweiten abstrakten Syntaxbaums unter Nutzung der zweiten Menge von Kommandocodewörtern und
- Vergleichen des ersten abstrakten Syntaxbaums und des zweiten abstrakten Syntaxbaums hinsichtlich einer Identität der ersten Menge von Kommandocodewörtern und der zweiten Menge von Kommandocodewörtern,
   wobei als ein Ergebnis des Parsing
- die Ausgabe des Validierungssymbols erfolgt im Falle, dass der erste abstrakte Syntaxbaum eine Teilmenge des zweiten abstrakten Syntaxbaums ist,
- eine Ausgabe eines Defizitsymbols erfolgt im Falle, dass eine Untermenge der ersten Menge von Kommandocodewörtern ausschließlich im ersten abstrakten Syntaxbaum vorkommt.

Dass zur Prüfung, ob die Kommandocodewörter des Steuerungsprogramms mit den Kommandocodewörtern des Testprogramms identisch sind, Parsing eingesetzt wird, hat den Vorteil, dass der Vergleich auch dann durchgeführt werden kann, wenn das Steuerungsprogramm und das Testprogramm in unterschiedlichen Programmiersprachen implementiert worden sind. Denn das Parsing umfasst eine Zerlegung des jeweils zu analysierenden Programmcodes in eine Struktur, die von einer Grammatik vorgegeben wird, wobei eine Fokussierung der Analyse ausschließlich auf die vergleichsrelevanten Elemente des Programmcodes, in diesem Fall auf die Kommandocodewörter, stattfindet und für den Vergleich irrelevante Information wie zum Beispiel Kommentare innerhalb des Programmcodes, Befehlsargumente, Parameter und/oder Variablen eliminiert werden.

Nach einer Ausfilterung nur der relevanten Information kann somit eine kontextfreie Darstellung, zum Beispiel in Form eines abstrakten Syntaxbaumes, erfolgen. Wird wie im vorliegenden Verfahren ein erster abstrakter Syntaxbaum unter Nutzung der identifizierten Kommandocodewörter des Steuerungsprogramms erstellt und gleichzeitig ein zweiter abstrakter Syntaxbaum unter Nutzung der Kommandocodewörter des Testprogramms erstellt, so kann ein Vergleich der Kommandocodewörter des Steuerungsprogramms und der Kommandocodewörter des Testprogramms effektiver und schneller erfolgen. Ein Vergleich der beiden abstrakten Syntaxräume kann Grundlage einer Auswertung hinsichtlich des Testabdeckungsgrads des Testprogramms darstellen.

Die Ergebnisse solch einer Auswertung können über eine Schnittstelle zur Verfügung gestellt werden. Zur Realisierung einer Ja/Nein-Aussage, ob die jeweilige Implementierung des Testprogramms eine für das Steuerungsprogramm effektive Testabdeckung aufweist, kann die Ausgabe eines Validierungssymbols bzw. eines Defizitsymbols mit geeigneten Mitteln zur anwenderfreundlichen Darstellung erfolgen.

In diesem Kontext ist ein "abstrakter Syntaxbaum" bzw. "Abstract Syntax Tree" eine logische Baumstruktur, welche die inhaltlichen Zusammenhänge eines Programmcodes in Form eines Syntaxbaumes wiedergibt. Da komplexe Informationen meist durch eine definierte Syntax in einem Programmcode linear abgespeichert sind, ist es für vergleichende Programme nicht einfach, den Inhalt zu analysieren. Um die relevante Information schneller zu finden, wird der Inhalt des zu analysierenden Programmcodes, hier des Steuerungsprogrammcodes und des Testprogrammcodes jeweils in einen abstrakten Syntaxbaum überführt, was oft auch selbst als "Parsen" bezeichnet wird.

Ein Parser ist generell ein Programm zur automatischen Zerlegung und Transformation von Zeichenketten in eine für die maschinelle Weiterverarbeitung geeignete Repräsentation (z. B. Baumstruktur).

Nach einer Ausführungsform der Erfindung erfolgt als ein weiteres Ergebnis des Parsing eine Ausgabe einer Statistik, wobei die Statistik eine erste Häufigkeit jedes Kommandocodeworts der ersten Menge von Kommandocodewörtern und/oder eine zweite Häufigkeit jedes Kommandocodeworts der zweiten Menge von Kommandocodewörtern angibt.

Die Angabe einer Häufigkeit des Auftretens eines Kommandocodeworts in dem Steuerungsprogramm indiziert in vorteilhafter Weise die jeweilige Relevanz des Kommandocodeworts für die Ausführbarkeit des Steuerungsprogramms. Kommandocodewörter des Steuerungsprogramms mit hoher Häufigkeit sollten wegen einer höheren Wahrscheinlichkeit eines Auftretens eines Fehlers unbedingt durch entsprechende Kommandocodewörter des Testprogramms abgedeckt werden.

Sollte durch die Angabe der Häufigkeiten des Auftretens der Kommandocodewörter ein Indiz erfolgen, dass Kommandocodewörter nur in dem Steuerungsprogramm, aber nicht in dem Testprogramm auftreten, bestünde Handlungsbedarf vonseiten des Entwicklers bzw. des Implementierers des Testprogramms dahingehend, in das Testprogramm die Kommandocodewörter in den Befehlssatz des Testprogramms aufzunehmen, die noch nicht durch das Testprogramm abgedeckt werden.

Ebenso deutet eine starke Diskrepanz zwischen den Häufigkeiten desselben Kommandocodeworts innerhalb des Steuerungsprogramms und des Testprogramms auf eine Ineffizienz des Testprogramms hin, wobei gleichzeitig unnötigerweise Prozessorressourcen verschwendet werden.

Ziel des Entwicklers bzw. Implementierers des Testprogramms sollte es daher sein, als Bestätigung, dass ein effizientes Testprogramm mit 100%iger Testabdeckung implementiert wurde, ein Validierungssymbol als ein Ergebnis einer Testabdeckungsanalyse zu erhalten, welches bestätigt, dass die Menge von Kommandocodewörtern des Steuerungsprogramms zumindest eine Teilmenge der Menge der Kommandocodewörter des Testprogramms darstellt. Ideales Ziel wäre es, wenn die Menge der Kommandocodewörter des Steuerungsprogramms identisch mit der Menge der Kommandocodewörter des Testprogramms wäre. Diese Ziele können im Wesentlichen auch dadurch erreicht werden, dass Kommandocodewörter, die ausschließlich im Testprogramm vorkommmen, aus dem Befehlssatz des Testprogramms eliminiert werden, wobei die Statistik mit Angabe der Häufigkeit der Kommandocodewörter des Testprogramms als eine wesentliche Indikation fungiert.

Nach einer Ausführungsform der Erfindung umfasst das Lesen des anwendungsspezifischen Testprogramms aus dem Speicher durch das Computersystem und das Lesen des Steuerungsprogramms durch das Computersystem eine Syntaxanalyse einer maschinennahen Programmiersprache, wobei die Syntaxanalyse eine Identifikation der ersten Menge von Kommandocodewörtern und der zweiten Menge von Kommandocodewörtern umfasst, wobei die Identifikation eine Grundlage für das Erstellen des ersten abstrakten Syntaxbaums und für das Erstellen des zweiten abstrakten Syntaxbaums darstellt.

Die Syntaxanalyse, welche nur die syntaktischen Zusammenhänge des jeweiligen Programmcodes und nicht dessen inhaltliche Bedeutung analysiert, bietet durch ausschließliche Fokussierung auf die Kernelemente des Programmcodes, also die Kommandocodewörter, eine vorteilhafte Grundlage für eine weitere Verarbeitung der Datenstrukturen durch eine geeignete Schnittstelle zur Auswertung. Der Zugriffsmodus auf vergleichskritische Elemente, in diesem Fall die Kommandocodewörter, und die Navigierbarkeit innerhalb der vereinfachten Datenstruktur wird signifikant erleichtert. Dadurch, dass die Syntaxanalyse auf Ebene einer maschinennahen Programmiersprache erfolgt, ist es nach vorheriger Kompilierung von einer höheren Programmiersprache auch möglich, dass das Steuerungsprogramm und das Testprogramm in unterschiedlichen höheren Programmiersprachen implementiert worden sind, aber durch Kompilierung zu einer maschinennahen Programmiersprache trotzdem miteinander verglichen werden können.

Nach einer Ausführungsform der Erfindung ist die maschinennahe Programmiersprache ein Ergebnis einer Kompilierung mindestens einer ersten höheren Programmiersprache und einer zweiten höheren Programmiersprache, wobei die erste höhere Programmiersprache die erste Menge von Kommandocodewörtern des Steuerungsprogramms und die zweite höhere Programmiersprache die zweite Menge von Kommandocodewörtern des Testprogramms definiert.

Dadurch, dass das Parsing bzw. die Syntaxanalyse im vorliegenden Verfahren erst auf Ebene der maschinennahen Programmiersprache stattfindet, können das Steuerungsprogramm und das Testprogramm in einer beliebigen höheren Programmiersprache implementiert werden. Voraussetzung dabei ist, dass ein Compiler die höhere Programmiersprache jeweils in einer maschinennahen Programmiersprache kompiliert. Dies hat den wesentlichen Vorteil, dass nicht nur das Steuerungsprogramm in einer höheren Programmiersprache, wie zum Beispiel C oder C++, geschrieben werden kann, sondern auch das Testprogramm. Ein in einer höheren Programmiersprache geschriebenes Testprogramm bedeutet nicht nur eine Erleichterung bei der Entwicklung und Implementierung des Testprogramms. Durch die höhere Abstraktionshöhe des Programmcodes ist auch eine wesentlich größere Portierbarkeit des Programmcodes gewährleistet. Die Code-Granularität einer höheren Programmiersprache ist nicht so fein wie bei einer maschinennahen Programmiersprache, wie zum Beispiel bei Assembler. Dies impliziert, dass die Entwicklung des Programmcodes in höherer Programmiersprache für das Testprogramm auch wesentlich näher am zu lösenden Problem liegt.

Nach einer Ausführungsform der Erfindung sind die erste höhere Programmiersprache und die zweite höhere Programmiersprache identisch oder verschieden

Dadurch, dass das Parsing bzw. die vergleichende Syntaxanalyse des Steuerungs- und des Testprogramms erst auf Ebene der maschinennahen Programmiersprache erfolgt, können die höhere Programmiersprache des Steuerungsprogramms und des Testprogramms entweder identisch oder auch verschieden sein. Aufgrund der nachfolgenden Kompilierung der höheren Programmiersprache in die maschinennahe Programmiersprache spielt eine Identität bzw. Verschiedenheit der höheren Programmiersprache des Steuerungsprogramms bzw. des Testprogramms keine Rolle. Den jeweiligen Fähigkeiten und Vorzügen des Entwicklers bzw. des Implementierers kann somit in vorteilhafter Weise Rechnung getragen werden.

Nach einer Ausführungsform der Erfindung definiert im Falle, dass die zweite höhere Programmiersprache unfähig ist, einen Teil der zweiten Menge von Kommandocodewörtern des Testprogramms zu definieren, die maschinennahe Programmiersprache diesen Teil der zweiten Menge von Kommandocodewörtern des Testprogramms und die Kompilierung für diesen Teil entfällt.

Dadurch, dass das Parsing bzw. die Syntaxanalyse auf Ebene der maschinennahen Programmiersprache stattfindet, kann ein Teil des Testprogramms in maschinennaher Programmiersprache geschrieben und implementiert werden. In diesem Fall entfällt die Notwendigkeit einer nachfolgenden Kompilierung. Sollte eine höhere Programmiersprache nicht die Möglichkeit bieten, einen Teil der Kommandocodewörter des Steuerungsprogramms durch entsprechende Befehlssätze abzudecken, so kann hilfsweise auf eine zusätzliche Implementierung eines Teils des Testprogramms in maschinennaher Programmiersprache zurückgegriffen werden. Dadurch, dass ein Teil des Testprogramms in maschinennaher Programmiersprache implementiert werden kann, kann in jedem Fall eine 100%ige Testabdeckung auch bei Unabhängigkeit von der benutzten höheren Programmiersprache des restlichen Teils des Testprogramms erreicht werden.

In der Regel können bestimmte Kommandowörter eines Mikroprozessors nur durch maschinennahe Programmiersprachen, wie zum Beispiel Assembler, programmiert werden. Dadurch, dass das Parsing bzw. die Syntaxanalyse des Steuerungs- bzw. des Testprogramms auf Ebene der maschinennahen Programmiersprache stattfindet, kann also dieser Teil des Testprogramms, welcher die ausschließlich in Assemblercode programmierbaren Testbestandteile enthält, weiterhin in Assembler programmiert werden. Bei Einsatz zum Beispiel eines ASM-Parsers, welcher Assembler in ein XML-Format transformiert, spielt die initiale Programmiersprache keine Rolle, wenn eine vorherige höhere Programmiersprache durch einen Compiler im Assembler kompiliert wurde, oder der zu analysierende Programmcode schon initial im Assembler geschrieben wurde. Für die nachfolgende Analyse bezüglich Identität der Kommandocodewörter und Eruierung des Testabdeckungsgrads ist die initial verwendete Programmiersprache somit unerheblich.

Nach einer Ausführungsform der Erfindung wird zur Ausführbarkeit des Steuerungsprogramms und des Testprogramms durch den Mikroprozessor die maschinennahe Programmiersprache in einen binären Maschinencode übersetzt.

Nach einer Ausführungsform der Erfindung erfolgt für eine Anpassung des Testprogramms an einen Typ des Mikroprozessors eine Anpassung der Syntaxanalyse durch eine Anpassung einer Definition einer Grammatik der maschinennahen Programmiersprache.

Dass eine Anpassung der Syntaxanalyse durch eine einfache Anpassung einer Definition einer Grammatik der maschinennahen Programmiersprache erfolgen kann, impliziert, dass das vorliegende Verfahren für jeden beliebigen Typ von Mikroprozessor oder Microcontroller einsetzbar ist. Eine Anpassung des vorliegenden Analyseverfahrens zur Eruierung der Testabdeckung eines Testprogramms kann somit durch einen Austausch einer Datei, welche eine Grammatik definiert, erfolgen. Das vorliegende Analyseverfahren ist somit unabhängig vom Typ des zu prüfenden Mikroprozessors bzw. Microcontrollers. Durch Einfügen von zusätzlichen Programmcodestücken kann sogar die Funktionalität des Parsers erweitert werden. Automatische Fehlerentdeckung und Berichtsfunktionalität könnte der Parser dadurch ebenfalls ausüben.

Nach einer Ausführungsform der Erfindung umfasst das Testprogramm:
- Testen eines RAMs des Mikroprozessors, und/oder
- Testen einer Adressierung mindestens eines Registers des Mikroprozessors, und/oder
- Testen eines Programmspeichers des Mikroprozessors, und/oder
- Testen einer Adressierung des Programmspeichers des Mikroprozessors, und/oder
- Vergleichendes Testen des RAMs des Mikroprozessors mit mindestens einem RAM eines weiteren Controllers, und/oder
- Testen einer doppelten Speicherung von Variablen im RAM des Mikroprozessors und/oder des weiteren Controllers, und/oder
- Testen eines Datenzugriffs.

Das Testprogramm zur Prüfung des Mikroprozessorsystems hinsichtlich seiner Integrität und Unversehrtheit der Befehlsausführungs-Hardwarekomponenten könnte in vorteilhafter Weise sich ergänzende oder redundante Tests mit unterschiedlichen Ansatzpunkten zur Prüfung der Hardwarekomponenten des Mikroprozessors umfassen. Das Testprogramm sollte verschiedene Messmöglichkeiten bieten, um Fehler einer ausfallsicheren Vorrichtung, bei der das Mikroprozessorsystem die Steuerungsfunktion übernimmt, schnell und sicher zu detektieren. Dabei können entweder Standardtests, wie zum Beispiel der Abraham-Test, der Galpat-Test, ein zyklischer Redundanzcheck des Programmspeichers, ein RAM-Vergleichstest oder ein RAM-Doppelspeichertest, oder auch ein individueller anwendungsspezifischer Test zum Einsatz kommen. Das Testprogramm sollte verschiedene Ansätze zur Testung der Datenverarbeitung sowie zur Testung der Adressierung von Hardwarekomponenten umfassen, um mögliche Fehlerquellen bei der Berechnung von Ausgangsgrößen schnell und zielsicher zu diagnostizieren. Insbesondere bei sicherheitskritischen Steuerungen, für welche das Mikroprozessorsystem eingesetzt wird, sollte ein anwendungsspezifisches Testprogramm derart konfiguriert sein, dass Fehler in der Befehlsausführungs-Hardware des Mikroprozessorsystems innerhalb kürzester Zeit korrekt diagnostiziert werden, um eine negativ wirkende Einwirkung auf technische Prozesse über Aktuatoren schnellstmöglich zu beenden.

Nach einer Ausführungsform der Erfindung sind das Steuerungsprogramm und das Testprogramm
- parallel und gleichzeitig, und/oder
- quasi-parallel in abwechselnd zugeteilten Zeitscheiben durch den Mikroprozessor ausführbar.

Dies kann den Vorteil haben, dass Prozesse zur Überprüfung der Sicherheit in die Steuerungsprozesse integriert werden könnten. Die Ausführung eines Testprogramms parallel oder quasi parallel zur Ausführung des Steuerungsprogramms erhöht die Fehleraufdeckung einer durch den Mikroprozessor zu steuernden Komponente, wie zum Beispiel eines Aktuators innerhalb eines Automatisierungsnetzwerkes.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung eine Vorrichtung zur Prüfung eines anwendungsspezifischen Testprogramms zum Testen eines Mikroprozessorsystems, welches ein Computersystem, einen Mikroprozessor und einen Programmspeicher zum Speichern eines Steuerungsprogramms umfasst, wobei der Mikroprozessor dazu ausgebildet ist, das Steuerungsprogramm und das Testprogramm auszuführen, wobei das Steuerungsprogramm eine erste Menge von Kommandocodewörtern umfasst, wobei die Vorrichtung dazu ausgebildet ist, folgende Verfahrensschritte auszuführen:
- Lesen des anwendungsspezifischen Testprogramms aus einem Speicher durch das Computersystem, wobei das anwendungsspezifische Testprogramm eine zweite Menge von Kommandocodewörtern umfasst,
- Lesen des Steuerungsprogramms durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe eines Validierungssymbols.

Im Folgenden werden bevorzugte Ausführungsformen der Erfindung anhand der folgenden Zeichnungen näher erläutert.

Es zeigen:
FIG 1 ein Blockdiagramm zur Veranschaulichung der beteiligten Komponenten im Verfahren zur Prüfung eines anwendungsspezifischen Testprogramms zum Testen eines Mikroprozessorsystems,
FIG 2 ein Flussdiagramm zur Veranschaulichung der Verfahrensschritte zur Ermittlung eines Testabdeckungsgrads eines Testprogramms.

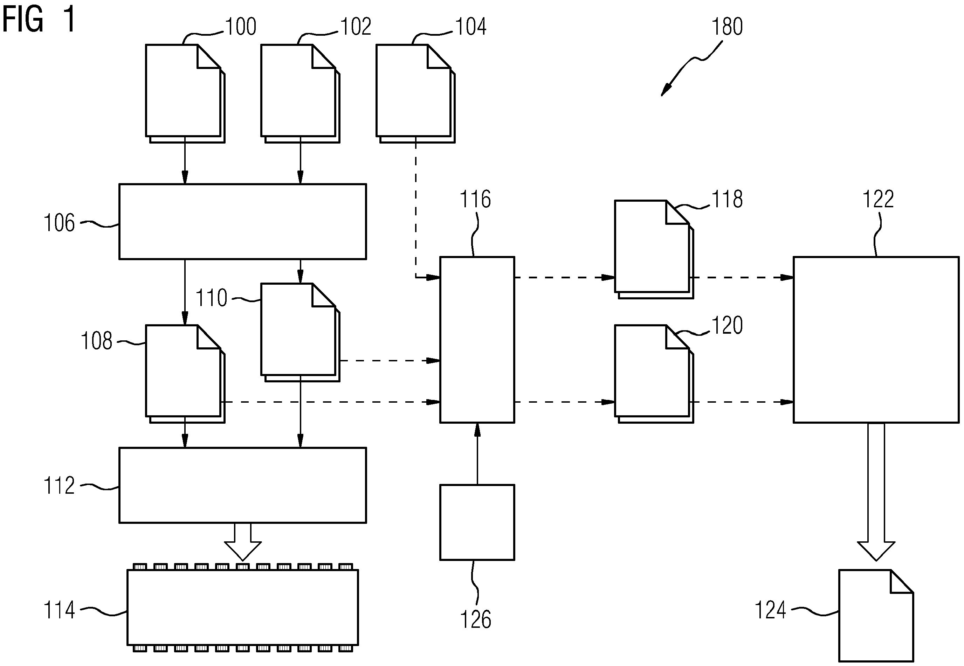

Die FIG1 zeigt ein Blockdiagramm zur Darstellung der Verfahren zur Prüfung eines anwendungsspezifischen Testprogramms 102, 104, 110 zum Testen eines Mikroprozessorsystems 114. Das Mikroprozessorsystem 114 umfasst einen Programmspeicher zum Speichern eines Steuerungsprogramms 100, 108. Das Steuerungsprogramm 100, 108, welches in der Regel in einer höheren Programmiersprache wie zum Beispiel C oder C++ geschrieben ist, wird durch einen Compiler 106 für eine höhere Programmiersprache, zum Beispiel durch einen C-Compiler, in eine maschinennahe Programmiersprache, wie zum Beispiel Assembler, transformiert, wobei ein Befehlssatz 108 in maschinennaher Programmiersprache, wie zum Beispiel Assembler, resultiert.

Das Testprogramm 102, welches in der dargestellten Ausführungsform ebenfalls in einer höheren Programmiersprache, wie zum Beispiel C oder C++, geschrieben ist, wird durch den Compiler 106, zum Beispiel einen C-Compiler, in einen maschinennahen Programmiercode, wie zum Beispiel Assembler, transformiert, wobei der Befehlssatz 110 des Testprogramms in Assemblercode resultiert. Ein Teil des Testprogramms 104 kann in der dargestellten Ausführungsform bereits in maschinennaher Programmiersprache programmiert worden sein, sodass eine Kompilierung durch den Compiler 106 entfällt.

Durch eine Kombination 112 von einem Assembler und einem Linker werden die in Assemblercode vorliegenden Befehlssätze 108 des Steuerungsprogramms, des Testprogramms 110 sowie des Teils 104 des Testprogramms in einen maschinenlesbaren binären Code transformiert, sodass das Steuerungsprogramm und das Testprogramm durch den Mikroprozessor 114 ausführbar sind.

Der im Assemblercode vorliegende Befehlssatz 108 des Steuerungsprogramms, der im Assemblercode vorliegende Befehlssatz 110 des Testprogramms 102 sowie der im Assemblercode vorliegende Befehlssatz des restlichen Testprogramms 104 werden von einem Parser 116 eingelesen. Aufgabe des Parsers ist es, aus den in Textform vorliegenden Assemblercodes eine maschinenlesbare Darstellung zu generieren, welche für die nachfolgende Analyse zur Bestimmung des Testabdeckungsgrads des Testprogramms 102, 104 besser geeignet ist. Dazu eliminiert der Parser irrelevante Programmcodeteile, wie zum Beispiel Kommentare oder Sprungmarken, aus dem Assemblercode und wandelt die Assemblerbefehle zum Beispiel in eine XML-basierte Baumdarstellung, zum Beispiel in Form eines abstrakten Syntaxbaums, um. Nach eindeutiger Identifikation und Zuordnung von Kommandocodewörtern des Steuerungsprogramms 110 und des Testprogramms 102, 104 erzeugt der Parser einen abstrakten Syntaxbaum 118 mit Kommandocodewörtern des Testprogramms 102, 104 und einen abstrakten Syntaxbaum 120 mit Kommandocodewörtern des Steuerungsprogramms 100.

Die beiden abstrakten Syntaxbäume 118 und 120 werden einer weiteren Schnittstelle 122, welche zum Beispiel eine Analysesoftware mit integriertem Skript zum Auslesen der abstrakten Syntaxbäume sowie zur Analyse und Auswertung der abstrakten Syntaxbäume hinsichtlich einer Identität und Auftretenshäufigkeit der Kommandocodewörter des Steuerungsprogramms 100 und des Testprogramms 102, 104 darstellen könnte, zur Verfügung gestellt. So könnte beispielsweise in einer konkreten Ausführungsform ein XSLT-Skript verwendet werden, welches die abstrakten Syntaxbäume im XML-Format einlesen könnte, einen Prüfbericht im XHTML-Format generieren könnte und welches zusätzlich eine Abfrage von Details bezüglich der Assemblerbefehle mittels XPATH-Ausdrücke ermöglichen könnte.

Die Ergebnisse dieser Testabdeckungsanalyse könnten in einer Schnittstelle 124 zur Ausgabe eines Prüfberichts über die Testabdeckung des Testprogramms 102, 104 in Form eines Prüfberichts und/oder einer Statistik ausgegeben werden. Dabei sollte der Prüfbericht als ein Ergebnis der Auswertung des Vergleichs der Kommandocodewörter des Steuerungsprogramms 100 und des Testprogramms 102, 104 eine Aussage enthalten, ob eine vorliegende Implementierung des Testprogramms 102, 104 einen einhundertprozentigen Testabdeckungsgrad aufweist oder nicht. Die Statistik könnte mittels einer Liste von Kommandocodewörtern des Steuerungsprogramms und des Testprogramms 102, 104 mit jeweils aufgeführter Auftretenshäufigkeit ein Indiz erbringen, welche Kommandocodewörter in dem Steuerungsprogramm 100 verwendet werden und ob diese Kommandocodewörter von dem Testprogramm 102, 104 vollständig abgedeckt werden oder nicht.

Damit das Verfahren zur Prüfung eines anwendungsspezifischen Testprogramms 102, 104 zum Testen eines Mikroprozessorsystems 114 auch bei verschiedenen Typen von Mikroprozessoren anwendbar ist, könnte mittels einer veränderbaren bzw. austauschbaren Datei mit Definition einer Grammatik 126 die von dem Parser 116 durchgeführte Syntaxanalyse an den jeweiligen Typ des Mikroprozessorsystems angepasst werden.

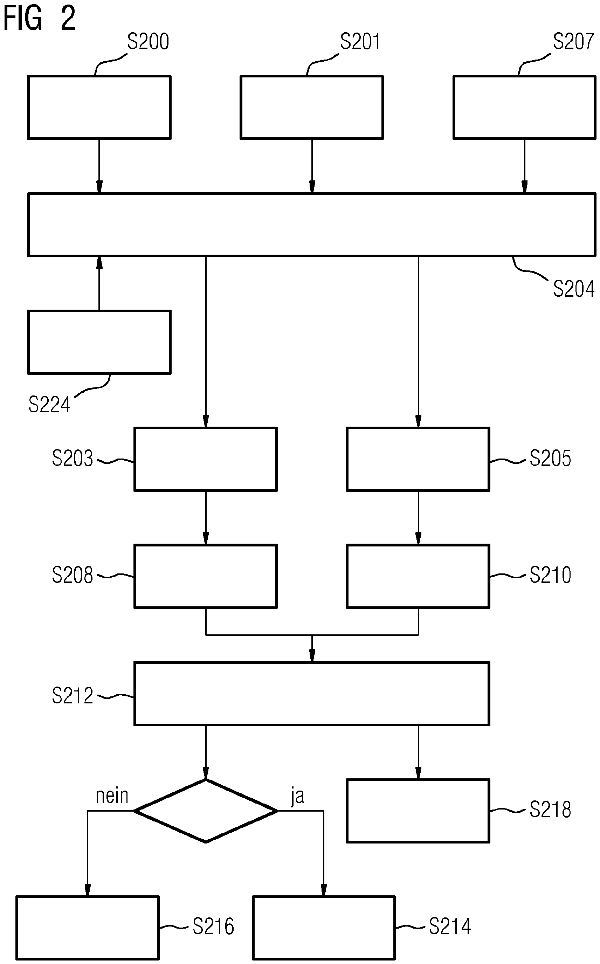

FIG 2 zeigt ein Flussdiagramm zur Darstellung der Verfahrensschritte des Verfahrens zur Prüfung eines anwendungsspezifischen Testprogramms 102, 104, 110 zum Testen eines Mikroprozessorsystems 114. In Schritt S200 erfolgt eine Kompilierung einer ersten höheren Programmiersprache des Steuerungsprogramms 100, welches zum Beispiel in C oder C++ geschrieben ist, mittels des Compilers 106 in eine maschinennahe Sprache, wie zum Beispiel Assembler. In Schritt S201 erfolgt eine Kompilierung der zweiten höheren Programmiersprache des Testprogramms 102 durch den Compiler 106 in eine maschinennahe Sprache, wie zum Beispiel Assembler. In Schritt S207 erfolgt die Definition eines nicht in der zweiten höheren Programmiersprache darstellbaren Teils des Testprogramms in maschinennaher Sprache, sodass eine Kompilierung durch den Compiler 106 nicht mehr notwendig ist.

Der Parser 116 liest die Assemblercodes des Steuerungsprogramms 100, des Testprogramms 102 sowie des restlichen Testprogramms 104 aus. In Schritt S204 erfolgt dann eine Syntaxanalyse des Assemblercodes 108 des Steuerungsprogramms 100, des Assemblercodes 110 des Testprogramms 102 und des Assemblercodes des restlichen Teils 104 des Testprogramms. Zuvor erfolgte in Schritt 224 eine Anpassung der Syntaxanalyse an den Typ des Mikroprozessorsystems durch Definition einer spezifischen Grammatik.

Unter Elimination von irrelevanten Programmcodeteilen, wie zum Beispiel Kommentare oder Sprungmarken, im Assemblercode 108 des Steuerungsprogramms 100 erfolgt in Schritt S203 eine Identifikation einer ersten Menge von Kommandocodewörtern des Steuerungsprogramms 100. Diese sind Grundlage für die im Schritt S208 erfolgende Erstellung eines ersten abstrakten Syntaxbaums 120. Ebenso erfolgt unter Eliminierung von irrelevanten Programmcodeteilen im Schritt S205 eine Identifikation einer zweiten Menge von Kommandocodewörtern des Testprogramms 102, 104, welche im Schritt S210 der Erstellung eines zweiten abstrakten Syntaxbaums 118 dienen.

In einer analysierenden und auswertender Einheit an Schnittstelle 122 erfolgt ein Vergleich des ersten abstrakten Syntaxbaums 120 und des zweiten abstrakten Syntaxbaums 118 hinsichtlich einer Identität der ersten Menge von Kommandocodewörtern des Steuerungsprogramms 100 und der zweiten Menge Kommandocodewörtern des Testprogramms 102, 104. An der Schnittstelle 124 zur Ausgabe der Ergebnisse der vorangegangenen Testabdeckungsanalyse erfolgt in Schritt S218 eine Ausgabe einer Statistik mit Angabe einer Auftretenshäufigkeit der Kommandocodewörter der ersten Menge und/oder der zweiten Menge. Aus dieser Statistik geht hervor, welche Kommandocodewörter in dem Steuerungsprogramm 100 verwendet werden und wie oft diese Kommandocodewörter bei der Ausführung des Steuerungsprogramms 100 verwendet werden. Gleichzeitig könnte in dieser Statistik eine Auflistung der vom Testprogramm 102, 104 verwendeten Kommandocodewörtern unter gleichzeitiger Angabe der Auftretenshäufigkeit jedes einzelnen Kommandocodeworts des Testprogramms 102, 104 erfolgen. In der Schnittstelle 124 könnte in einer Ausführungsform ebenfalls ein Prüfbericht ausgegeben werden, der als ein Ergebnis der vorangegangenen Testabdeckungsanalyse eine Aussage enthält, ob eine derzeit vorliegende Implementierung des Testprogramms 102, 104 eine vollständige Testabdeckung (S214) oder nicht (S216).

Das beschriebene Verfahren zur Prüfung eines anwendungsspezifischen Testprogramms zum Testen eines Mikroprozessorsystems könnte daher einem Entwickler bzw. Implementierer eines solchen Testprogramms einen aussagekräftigen Hinweis bieten, welche Kommandocodewörter in dem zu implementierenden Testprogramm enthalten sein müssen, um eine vollständige Testabdeckung des Steuerungsprogramms zu erzielen. Das Verfahren erlaubt dem Entwickler bzw. Implementierer auch, einen großen Teil des Testprogramms in einer höheren Programmiersprache zu erstellen, was für den Entwickler eine erhebliche Erleichterung bedeutet im Vergleich zur Programmierung des Testprogramms in einer maschinennahen Programmiersprache, wie zum Beispiel Assembler.

Durch die parallele bzw. quasi-parallele Ausführbarkeit von Steuerungsprogramm und Testprogramm können Steuerungsprozesse und Sicherheitsfunktionen in dem Mikroprozessorsystem integriert ablaufen, was die Fehleraufdeckung eines zu steuernden sicherheitskritischen Aktuators wesentlich erhöht.

## Patentansprüche

1. Computer-implementiertes Verfahren zur Prüfung eines anwendungsspezifischen Testprogramms (102, 104, 110) zum Testen eines Mikroprozessorsystems (114), welches einen Mikroprozessor (114) und einen Programmspeicher zum Speichern eines Steuerungsprogramms (100, 108) umfasst, wobei das Steuerungsprogramm (100, 108) durch den Mikroprozessor (114) ausführbar ist, wobei das Steuerungsprogramm (100, 108) eine erste Menge von Kommandocodewörtern umfasst, wobei das Verfahren folgende Schritte umfasst:
- Lesen des anwendungsspezifischen Testprogramms (102, 104, 110) aus einem Speicher durch ein Computersystem, wobei das anwendungsspezifische Testprogramm (102, 104, 110) eine zweite Menge von Kommandocodewörtern umfasst,
- Lesen des Steuerungsprogramm (100, 108) durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe (124) eines Validierungssymbols.

2. Verfahren nach Anspruch 1, wobei die Prüfung durch das Computersystem, ob die erste Menge von Kommandocodewörtern und die zweite Menge von Kommandocodewörtern übereinstimmen ein Parsing (116) der ersten Menge von Kommandocodewörtern und der zweiten Menge von Kommandocodewörtern umfasst, wobei das Parsing (116) folgende Schritte umfasst
- Erstellen eines ersten abstrakten Syntaxbaums (120) unter Nutzung der ersten Menge von Kommandocodewörtern (S208) und
- Erstellen eines zweiten abstrakten Syntaxbaums (118) unter Nutzung der zweiten Menge von Kommandocodewörtern (S210) und
- Vergleichen des ersten abstrakten Syntaxbaums (120) und des zweiten abstrakten Syntaxbaums (118) hinsichtlich einer Identität der ersten Menge von Kommandocodewörtern und der zweiten Menge von Kommandocodewörtern (S212), wobei als ein Ergebnis des Parsing (116)
- die Ausgabe (124) des Validierungssymbols (S214) erfolgt im Falle, dass der erste abstrakte Syntaxbaum (120) eine Teilmenge des zweiten abstrakten Syntaxbaums (118) ist,
- eine Ausgabe (124) eines Defizitsymbols (S216) erfolgt im Falle, dass eine Untermenge der ersten Menge von Kommandocodewörtern ausschließlich im ersten abstrakten Syntaxbaum (120) vorkommt.

3. Verfahren nach Anspruch 1, wobei als ein weiteres Ergebnis des Parsing (116) eine Ausgabe (124) einer Statistik erfolgt (S218), wobei die Statistik eine erste Häufigkeit jedes Kommandocodeworts der ersten Menge von Kommandocodewörtern und/oder eine zweite Häufigkeit jedes Kommandocodeworts der zweiten Menge von Kommandocodewörtern angibt.

4. Verfahren nach Anspruch 1, wobei das Lesen des anwendungsspezifischen Testprogramms (102, 104, 110) aus dem Speicher durch das Computersystem und das Lesen des Steuerungsprogramms (100, 108) durch das Computersystem eine Syntaxanalyse (S204) einer maschinennahen Programmiersprache umfasst, wobei die Syntaxanalyse eine Identifikation der ersten Menge von Kommandocodewörtern (S203) und der zweiten Menge von Kommandocodewörtern (S205) umfasst, wobei die Identifikation eine Grundlage für das Erstellen des ersten abstrakten Syntaxbaums (120) (SS208) und für das Erstellen des zweiten abstrakten Syntaxbaums (118) (S210) darstellt.

5. Verfahren nach Anspruch 4, wobei die maschinennahe Programmiersprache ein Ergebnis einer Kompilierung (106) mindestens einer ersten höheren Programmiersprache (S200) und einer zweiten höheren Programmiersprache (S201) ist, wobei die erste höhere Programmiersprache die erste Menge von Kommandocodewörtern des Steuerungsprogramms (100, 108) und die zweite höhere Programmiersprache die zweite Menge von Kommandocodewörtern des Testprogramms (102, 104, 110) definiert.

6. Verfahren nach Anspruch 5, wobei die erste höhere Programmiersprache und die zweite höhere Programmiersprache identisch oder verschieden sind.

7. Verfahren nach den Ansprüchen 5 oder 6, wobei im Falle, dass die zweite höhere Programmiersprache unfähig ist, einen Teil der zweiten Menge von Kommandocodewörtern des Testprogramms (102, 104, 110) zu definieren, die maschinennahe Programmiersprache diesen Teil der zweiten Menge von Kommandocodewörtern des Testprogramms (102, 104, 110) definiert (S207) und die Kompilierung (106) (106) für diesen Teil entfällt.

8. Verfahren nach den Ansprüchen 4 bis 7, wobei zur Ausführbarkeit des Steuerungsprogramms (100, 108) und des Testprogramms (102, 104, 110) durch den Mikroprozessor (114) die maschinennahe Programmiersprache in einen binären Maschinencode übersetzt wird.

9. Verfahren nach einem der vorhergehenden Ansprüche, wobei für eine Anpassung des Testprogramms (102, 104, 110) an einen Typ des Mikroprozessors (114) eine Anpassung der Syntaxanalyse durch eine Anpassung einer Definition einer Grammatik (126) der maschinennahen Programmiersprache erfolgt (S224).

10. Verfahren nach einem der vorhergehenden Ansprüche, wobei das Testprogramm (102, 104, 110) umfasst:
- Testen eines RAMs des Mikroprozessors (114), und/oder
- Testen einer Adressierung mindestens eines Registers des Mikroprozessors (114), und/oder
- Testen eines Programmspeichers des Mikroprozessors (114), und/oder
- Testen einer Adressierung des Programmspeichers des Mikroprozessors (114), und/oder
- Vergleichendes Testen des RAMs des Mikroprozessors (114) mit mindestens einem RAM eines weiteren Controllers, und/oder
- Testen einer doppelten Speicherung von Variablen im RAM des Mikroprozessors (114) und/oder des weiteren Controllers, und/oder
- Testen eines Datenzugriffs.

11. Verfahren nach einem der vorhergehenden Ansprüche, wobei das Steuerungsprogramm (100, 108) und das Testprogramm (102, 104, 110)
- parallel und gleichzeitig, und/oder
- quasi-parallel in abwechselnd zugeteilten Zeitscheiben durch den Mikroprozessor (114) ausführbar sind.

12. Computerprogramm-Produkt mit von einem Prozessor ausführbaren Instruktionen zur Durchführung der Verfahrensschritte gemäß einem der vorigen Ansprüche.

13. Vorrichtung (180) zur Prüfung eines anwendungsspezifischen Testprogramms (102, 104, 110) zum Testen eines Mikroprozessorsystems (114), welches ein Computersystem, einen Mikroprozessor (114) und einen Programmspeicher zum Speichern eines Steuerungsprogramms (100, 108) umfasst, wobei der Mikroprozessor (114) dazu ausgebildet ist, das Steuerungsprogramm (100, 108) und das Testprogramm (102, 104, 110) auszuführen, wobei das Steuerungsprogramm (100, 108) eine erste Menge von Kommandocodewörtern umfasst, wobei die Vorrichtung dazu ausgebildet ist, folgende Verfahrensschritte auszuführen:
- Lesen des anwendungsspezifischen Testprogramms (102, 104, 110) aus einem Speicher durch das Computersystem, wobei das anwendungsspezifische Testprogramm (102, 104, 110) eine zweite Menge von Kommandocodewörtern umfasst,
- Lesen des Steuerungsprogramms (100, 108) durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe (124) eines Validierungssymbols.

## Geänderte Patentansprüche

### Geänderte Patentansprüche gemäss Regel 137(2) EPÜ.

**1.** Computer-implementiertes Verfahren zur Prüfung eines anwendungsspezifischen Testprogramms (102, 104, 110) zum Testen eines Mikroprozessorsystems (114), welches einen Mikroprozessor (114) und einen Programmspeicher zum Speichern eines Steuerungsprogramms (100, 108) umfasst, wobei das Steuerungsprogramm (100, 108) durch den Mikroprozessor (114) ausführbar ist, wobei das Steuerungsprogramm (100, 108) eine erste Menge von Kommandocodewörtern umfasst, wobei das Verfahren folgende Schritte umfasst:
- Lesen des anwendungsspezifischen Testprogramms (102, 104, 110) aus einem Speicher durch ein Computersystem, wobei das anwendungsspezifische Testprogramm (102, 104, 110) eine zweite Menge von Kommandocodewörtern umfasst,
- Lesen des Steuerungsprogramms (100, 108) durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe (124) eines Validierungssymbols,
wobei die Prüfung durch das Computersystem, ob die erste Menge von Kommandocodewörtern und die zweite Menge von Kommandocodewörtern übereinstimmen, ein Parsing (116) der ersten Menge von Kommandocodewörtern und der zweiten Menge von Kommandocodewörtern umfasst, wobei das Parsing (116) folgende Schritte umfasst
- Erstellen eines ersten abstrakten Syntaxbaums (120) unter Nutzung der ersten Menge von Kommandocodewörtern (S208) und
- Erstellen eines zweiten abstrakten Syntaxbaums (118) unter Nutzung der zweiten Menge von Kommandocodewörtern (S210) und
- Vergleichen des ersten abstrakten Syntaxbaums (120) und des zweiten abstrakten Syntaxbaums (118) hinsichtlich einer Identität der ersten Menge von Kommandocodewörtern und der zweiten Menge von Kommandocodewörtern (S212), wobei als ein Ergebnis des Parsing (116)
- die Ausgabe (124) des Validierungssymbols (S214) erfolgt im Falle, dass der erste abstrakte Syntaxbaum (120) eine Teilmenge des zweiten abstrakten Syntaxbaums (118) ist,
- eine Ausgabe (124) eines Defizitsymbols (S216) erfolgt im Falle, dass eine Untermenge der ersten Menge von Kommandocodewörtern ausschließlich im ersten abstrakten Syntaxbaum (120) vorkommt.

**2.** Verfahren nach Anspruch 1, wobei als ein weiteres Ergebnis des Parsing (116) eine Ausgabe (124) einer Statistik erfolgt (S218), wobei die Statistik eine erste Häufigkeit jedes Kommandocodeworts der ersten Menge von Kommandocodewörtern und/oder eine zweite Häufigkeit jedes Kommandocodeworts der zweiten Menge von Kommandocodewörtern angibt.

**3.** Verfahren nach Anspruch 1, wobei das Lesen des anwendungsspezifischen Testprogramms (102, 104, 110) aus dem Speicher durch das Computersystem und das Lesen des Steuerungsprogramms (100, 108) durch das Computersystem eine Syntaxanalyse (S204) einer maschinennahen Programmiersprache umfasst, wobei die Syntaxanalyse eine Identifikation der ersten Menge von Kommandocodewörtern (S203) und der zweiten Menge von Kommandocodewörtern (S205) umfasst, wobei die Identifikation eine Grundlage für das Erstellen des ersten abstrakten Syntaxbaums (120) (SS208) und für das Erstellen des zweiten abstrakten Syntaxbaums (118) (S210) darstellt.

**4.** Verfahren nach Anspruch 3, wobei die maschinennahe Programmiersprache ein Ergebnis einer Kompilierung (106) mindestens einer ersten höheren Programmiersprache (S200) und einer zweiten höheren Programmiersprache (S201) ist, wobei die erste höhere Programmiersprache die erste Menge von Kommandocodewörtern des Steuerungsprogramms (100, 108) und die zweite höhere Programmiersprache die zweite Menge von Kommandocodewörtern des Testprogramms (102, 104, 110) definiert.

**5.** Verfahren nach Anspruch 4, wobei die erste höhere Programmiersprache und die zweite höhere Programmiersprache identisch oder verschieden sind.

**6.** Verfahren nach den Ansprüchen 4 oder 5, wobei im Falle, dass die zweite höhere Programmiersprache unfähig ist, einen Teil der zweiten Menge von Kommandocodewörtern des Testprogramms (102, 104, 110) zu definieren, die maschinennahe Programmiersprache diesen Teil der zweiten Menge von Kommandocodewörtern des Testprogramms (102, 104, 110) definiert (S207) und die Kompilierung (106) (106) für diesen Teil entfällt.

**7.** Verfahren nach den Ansprüchen 3 bis 6, wobei zur Ausführbarkeit des Steuerungsprogramms (100, 108) und des Testprogramms (102, 104, 110) durch den Mikroprozessor (114) die maschinennahe Programmiersprache in einen binären Maschinencode übersetzt wird.

**8.** Verfahren nach einem der vorhergehenden Ansprüche, wobei für eine Anpassung des Testprogramms (102, 104, 110) an einen Typ des Mikroprozessors (114) eine Anpassung der Syntaxanalyse durch eine Anpassung einer Definition einer Grammatik (126) der maschinennahen Programmiersprache erfolgt (S224).

**9.** Verfahren nach einem der vorhergehenden Ansprüche, wobei das Testprogramm (102, 104, 110) umfasst:
- Testen eines RAMs des Mikroprozessors (114), und/oder
- Testen einer Adressierung mindestens eines Registers des Mikroprozessors (114), und/oder
- Testen eines Programmspeichers des Mikroprozessors (114), und/oder
- Testen einer Adressierung des Programmspeichers des Mikroprozessors (114), und/oder
- Vergleichendes Testen des RAMs des Mikroprozessors (114) mit mindestens einem RAM eines weiteren Controllers, und/oder
- Testen einer doppelten Speicherung von Variablen im RAM des Mikroprozessors (114) und/oder des weiteren Controllers, und/oder
- Testen eines Datenzugriffs.

**10.** Verfahren nach einem der vorhergehenden Ansprüche, wobei das Steuerungsprogramm (100, 108) und das Testprogramm (102, 104, 110)
- parallel und gleichzeitig, und/oder
- quasi-parallel in abwechselnd zugeteilten Zeitscheiben durch den Mikroprozessor (114) ausführbar sind.

**11.** Computerprogramm-Produkt mit von einem Prozessor ausführbaren Instruktionen zur Durchführung der Verfahrensschritte gemäß einem der vorigen Ansprüche.

**12.** Vorrichtung (180) zur Prüfung eines anwendungsspezifischen Testprogramms (102, 104, 110) zum Testen eines Mikroprozessorsystems (114), welches ein Computersystem, einen Mikroprozessor (114) und einen Programmspeicher zum Speichern eines Steuerungsprogramms (100, 108) umfasst, wobei der Mikroprozessor (114) dazu ausgebildet ist, das Steuerungsprogramm (100, 108) und das Testprogramm (102, 104, 110) auszuführen, wobei das Steuerungsprogramm (100, 108) eine erste Menge von Kommandocodewörtern umfasst, wobei die Vorrichtung dazu ausgebildet ist, folgende Verfahrensschritte auszuführen:
- Lesen des anwendungsspezifischen Testprogramms (102, 104, 110) aus einem Speicher durch das Computersystem, wobei das anwendungsspezifische Testprogramm (102, 104, 110) eine zweite Menge von Kommandocodewörtern umfasst,
- Lesen des Steuerungsprogramms (100, 108) durch das Computersystem,
- Prüfung durch das Computersystem, ob die erste Menge von Kommandocodewörtern und die zweite Menge von Kommandocodewörtern übereinstimmen,
- im Falle, dass die erste Menge von Kommandocodewörtern in der zweiten Menge von Kommandocodewörtern enthalten ist, Ausgabe (124) eines Validierungssymbols,
wobei die Prüfung durch das Computersystem, ob die erste Menge von Kommandocodewörtern und die zweite Menge von Kommandocodewörtern übereinstimmen, ein Parsing (116) der ersten Menge von Kommandocodewörtern und der zweiten Menge von Kommandocodewörtern umfasst, wobei die Vorrichtung dazu ausgebildet ist, folgende Verfahrensschritte des Parsings (116) auszuführen:
- Erstellen eines ersten abstrakten Syntaxbaums (120) unter Nutzung der ersten Menge von Kommandocodewörtern (S208) und
- Erstellen eines zweiten abstrakten Syntaxbaums (118) unter Nutzung der zweiten Menge von Kommandocodewörtern (S210) und
- Vergleichen des ersten abstrakten Syntaxbaums (120) und des zweiten abstrakten Syntaxbaums (118) hinsichtlich einer Identität der ersten Menge von Kommandocodewörtern und der zweiten Menge von Kommandocodewörtern (S212), wobei als ein Ergebnis des Parsing (116)
- die Ausgabe (124) des Validierungssymbols (S214) erfolgt im Falle, dass der erste abstrakte Syntaxbaum (120) eine Teilmenge des zweiten abstrakten Syntaxbaums (118) ist,
- eine Ausgabe (124) eines Defizitsymbols (S216) erfolgt im Falle, dass eine Untermenge der ersten Menge von Kommandocodewörtern ausschließlich im ersten abstrakten Syntaxbaum (120) vorkommt.
